# EUROPEAN PATENT APPLICATION

(11) **EP 4 312 346 A1**
(43) Date of publication of application: **31.01.2024**
(21) Application number: 22187585.9
(22) Date of filing: 28.07.2022
(51) Int. Cl.: H02J 13/00

(54) **AUTOMATIC ENGINEERING OF PROCESS BUS SYSTEM**

(71) Applicant: Siemens Aktiengesellschaft, 80333 München (DE)
(72) Inventor: Agarwal, Abhishek, 560034 Bangalore, Karnataka (IN); Flemming, Stefan, 90574 Rosstal-Buchschwabach (DE)
(74) Representative: Patentanwaltskanzlei WILHELM & BECK

(57) **Abstract**

A computer implemented method (100) for engineering a process bus system (200), a substation engineering tool (301), and a substation communication configuration tool (302) are provided. The computer implemented method (100) obtains, from the substation engineering tool (301), engineering data associated intelligent electronic device(s) (IEDs) (202A-202B, 203A-203D) deployable in a substation, using an SCD file, generates publisher-subscriber data by determining a publisher logical device (701, 801) and a subscriber logical device (702, 802) from the IEDs (202A-202B, 203A-203D) and the connections therebetween, based on the engineering data, stores into the engineering data the publisher-subscriber data, transfers the engineering data to the substation communication configuration tool (302) via the SCD file, and automatically maps, in the substation communication configuration tool (302), the publisher logical device (701, 801) and the subscriber logical device (702, 802) with the GOOSE and SMV information based on the engineering data and the publisher-subscriber data.

## Description

The present disclosure relates to a system and a method for engineering a process bus system, more particularly, engineering communication associated with protection and control devices such as an Intelligent Electronic Device (IED) deployable in a substation.

Typically, substations include multiple power and distribution transformers, electrical cables, switching devices, reactive power, and grounding equipment, etc. The substations also include devices to protect end electrical equipment being powered by the substations against power system anomalies such as current surges, voltage surges, power swings, faults, process overloads, etc. This protection is generally accomplished with help of Intelligent Electronic Devices, hereinafter referred to as IEDs, that provide different functions including substation protection, control, monitoring, and/or metering functions.

The IEDs are microprocessor and/or microcontroller-based devices that are associated with primary power system equipment, such as circuit breakers, generators, transformers, power lines, power cables, capacitor banks, etc. The IEDs can receive power system information such as voltage and current from voltage sensors and current sensors respectively, to perform various functions. Common types of IEDs include protective relay devices, load tap changer controllers, circuit breaker controllers, recloser controllers, voltage regulators, bay controllers, fault recorders, merging units, etc. A single IED typically is capable of performing several protection, metering, monitoring and/or control functions concurrently. However, some protection and automation functions need simultaneous participation from multiple IEDs.

A contemporary substation automation system, based on IEC 61850, generally includes protection and control IEDs, substation automation process controller IEDs, etc., each of the IEDs having their own Human Machine Interfaces (HMIs), substation level HMI, and substation to control center gateways. Such equipment typically involves extensive off-line configuration, that is engineering, to be performed, before being deployed in the substation, to perform its individual functions. Additionally, every IED also should be configured for various protection, measurement, monitoring and control functions. This includes performing following configurations either manually and/or in a semi-automatic manner, for example, hardware configuration, application logic configuration such as protection function blocks and connections between them, IEC 61850 communication and data configuration, HMI related configuration, mapping and connection of every input/output (I/O) signal from external IEDs into application logic, mapping of light emitting diodes (LEDs) that indicate statuses, etc.

Conventionally, instrument transformers are directly connected to the protection devices, that is IEDs, with parallel copper lines. This solution is proven, but requires a lot of wiring effort and cost, has physical limits such as accuracy, saturation, etc., and bears the risk of open current transformer circuits. In Process bus engineering, a Merging Unit (MU) is positioned close to the instrument transformer. The MU records the measured values of the instrument transformers, digitizes them and sends them to protection device(s) via a data stream of sampled measured values (SMV) over fiber optical Ethernet. In process bus engineering, the protection relays no longer are required to work with analog values, as they can directly use the digital values from the sampled measured values (SMV) data stream. Measured values of conventional and non-conventional transformers are converted into standardized, Ethernet-based telegrams, that is, SMVs.

However, engineering of process bus system is rather complex and time consuming. The engineering ranges from configuration of the single line diagram (SLD) connections, allocation of appropriate signals to the elements of the SLD in the display pages, to configuration of Generic Object Oriented Substation Event (GOOSE) and SMV connections in a system configuration tool.

The engineering of the process bus system in a project might involve engineering of busbar protection system with process bus protocol including single line and display page configuration, GOOSE connections in the system configuration tool wherein a number of Goose connections depends on the size and/or complexity of the project and might go up to about 3000 connections on an average, and SMV mapping creation in the system configuration tool wherein a number of SMV mappings depends on the merging unit streams supported in the project. For example, about 30 merging unit streams. Considering the above numbers, it typically takes about 100 hours for a configuration engineer to configure a process bus system comprising of about 20 bays.

As most of the above steps related with configuration are discrete and complex in nature, a configuration engineer spends considerable time and effort to deploy or commission the substation automation equipment and system. Moreover, the configuration engineer ought to be trained in aspects of substation automation engineering to perform the tasks correctly without errors. Furthermore, manual configuration makes the entire process prone to mistakes and prone to errors, thereby rendering it highly inefficient.

Accordingly, it is an object of the present disclosure to provide a system and a method that automatically engineer a process bus system without relying on human skills thereby, making the process efficient, effective and accurate.

The present disclosure achieves the aforementioned object by providing a substation engineering tool, a substation communication configuration tool, and a computer implemented method for engineering a process bus system.

As used herein, the process bus system comprises, but is not limited to, a transformer such as a current transformer or a voltage transformer and process bus devices including merging unit(s) operably connected to the transformer and process bus client device(s) operably connected to the merging unit(s), for example, through a wired network such as ethernet optical fiber cables, etc. Each of the merging units record measured values of the transformer, digitize the recorded measured values and send the digitized measured values to the process bus client device(s) via a sampled measured value (SMV) data stream over the wired network. Each of the merging unit(s) publish current-sampled and voltage-sampled values on a process-bus network according to the IEC 61850-9-2 and IEC 61869-9 standards. The process bus client device(s) allow a subscription of current-sampled and voltage-sampled values published by the merging unit(s) complying with the IEC 61850-9-2 and IEC 61869-9 standards.

The computer implemented method for engineering the process bus system comprises obtaining, from a substation engineering tool, engineering data associated with one or more intelligent electronic device(s) (IEDs) deployable in a substation.

As used herein, "engineering data" refers to one or more of a capability of each of the IEDs, a Single Line Diagram (SLD) of the substation, Generic Object-Oriented Substation Event (GOOSE) subscription information, a protocol, that is, a communication protocol, associated with each of the IEDs and merging units, sampled measured values (SMV) streams having measurements recorded by a current transformer and/or a voltage transformer deployed in the substation that are routed to the merging unit(s).

According to one embodiment of the present disclosure, the computer implemented method receives the capability of each of the IEDs from an IED Capability Description (ICD) file associated with each of the IEDs, having a generic description of entire capability range of a given IED, including the functions and objects that the IED can support.

According to one embodiment of the present disclosure, the computer implemented method receives the GOOSE subscription information from an instantiated IED description (IID) file associated with each instantiated IED, having therein configuration information associated with the IED such as GOOSE subscription information.

According to one embodiment of the present disclosure, the computer implemented method extracts the engineering data from at least a substation configuration description (SCD) file available in the substation engineering tool.

The computer implemented method for engineering the process bus system comprises generating, based on the engineering data, publisher-subscriber data by determining a publisher logical device and a subscriber logical device corresponding to the publisher logical device, from the IEDs and the connections therebetween.

As used herein, "publisher-subscriber data" refers to data associated with the IEDs, and includes, therein the publisher logical device and the subscriber logical device corresponding to the publisher logical device.

Also used herein, "publisher logical device" refers to a logical instance of a publisher device, that is, a merging unit or an IED publishing information to one or more other IEDs.

Also used herein, "subscriber logical device" refers to a logical instance of a subscriber device, that is, an IED subscribing information from a publisher device.

Advantageously, the publisher-subscriber data includes data associated with a publisher device and many subscriber devices corresponding to the publisher device.

Advantageously, an IED may act as a publisher device or a subscriber device, based on a communication protocol associated therewith. For example, in an SLD, a direction of a connection node signifies whether a port associated with the connection node is publishing or subscribing.

The computer implemented method, for generating the publisher-subscriber data, identifies a protocol associated with the IEDs and assigns the IEDs a role of the publisher logical device or the subscriber logical device. For example, when a merging unit protocol is identified to be enabled then the IED acts as a publisher device and when a client protocol is identified to be enabled then the IED acts as a subscriber device. Advantageously, the protocols are IEC 61850 protocols.

Advantageously, for generating the publisher-subscriber data, the computer implememted method, in the substation engineering tool, generates sourceRef information. As used herein, "sourceRef information" refers to information associated with an IED and comprises a service such as "SMV" and an input such as "Current". Each sourceRef element of the sourceRef information represents an input coming from a data object, for example, representing an IED. The computer implemented method generates, in the substation engineering tool, dedicated ports for the SMV data streams in the publisher logical devices and in the subscriber logical devices so as to link these two together.

For example, the following excerpt from an SCD file shows a code snippet having sourceRef information therein:

```
 <ConductingEquipment name="BE2" virtual="false" type="VTR">
       <Terminal name="T1" connectivityNode="Project5/Voltage level1/Bay1/CN1"
       substationName="Project5" voltageLevelName="Voltage level1" bayName="Bay1"
       cNodeName="CN1" />
       <SubEquipment name="A" phase="A" virtual="false">
              <LNode iedName="SIP" IdInst="Mod2_MU1" prefix="U01A"
              InClass="TVTR" InInst="1" InType="SIPROTEC5_LNType_TVTR" />
              <EqFunction name="ProxyLNs">
                      <EqSubFunction name="ProxyLN1">
                             <LNode iedName="SIP1" IdInst="PowS_MeasPointV3ph1"
                             InClass="TVTR" InInst="1" InType="SIPROTEC5_LNType_TVTR">
                                     <Private type="eIEC61850-6-100">
                                            <eIEC61850-6-100:LNodeInputs>
                                                   <eIEC61850-6-100:SourceRef
                                                   service="SMV" input="Voltage">
                                                           <eIEC61850-6-
                                                           100:SMVParametersRef
 id="SIPMod2MU103" />
                                                                  </eIEC61850-6-
                                                                  100:SourceRef>
                                            </eIEC61850-6-100:LNodeInputs>
                                     </Private>
                             </LNode>
                      </EqSubFunction>
              </EqFunction>
       </SubEquipment>
       <SubEquipment name="B" phase="B" virtual="false">
              <LNode iedName="SIP" IdInst="Mod2_MU1" prefix="U01B"
              InClass="TVTR" InInst="2" InType="SIPROTEC5_LNType_TVTR" />
              <EqFunction name="ProxyLNs">
                      <EqSubFunction name="ProxyLN1">
                             <LNode iedName="SIP1" IdInst="PowS_MeasPointV3ph1"
                             InClass="TVTR" InInst="2" InType="SIPROTEC5_LNType_TVTR">
                                     <Private type="eIEC61850-6-100">
                                            <eIEC61850-6-100:LNodeInputs>
                                                   <eIEC61850-6-100:SourceRef
                                                   service="SMV" input="Voltage">
                                                   <eIEC61850-6-
                                                   100:SMVParametersRef id="SIPMod2MU103" />
                                            </eIEC61850-6-100:SourceRef>
                                     </eIEC61850-6-100:LNodeInputs>
                                     </Private>
                             </LNode>
                      </EqSubFunction>
              </EqFunction>
       </SubEquipment>
       <SubEquipment name="C" phase="C" virtual="false">
              <LNode iedName="SIP" IdInst="Mod2_MU1" prefix="U01C"
              InClass="TVTR" InInst="3" InType="SIPROTEC5_LNTypeTVTR" />
              <EqFunction name="ProxyLNs">
                      <EqSubFunction name="ProxyLN1">
                             <LNode iedName="SIP1" IdInst="PowS_MeasPointV3ph1"
                             InClass="TVTR" InInst="3" InType="SIPROTEC5_LNType_TVTR">
                                     <Private type="eIEC61850-6-100">
                                            <eIEC61850-6-100:LNodeInputs>
                                                   <eIEC61850-6-100:SourceRef
                                                   service="SMV" input="Voltage">
                                                   <eIEC61850-6-
                                                   100:SMVParametersRef id="SIPMod2MU103" />
                                            </eIEC61850-6-100:SourceRef>
                                     </eIEC61850-6-100:LNodeInputs>
                                     </Private>
                             </LNode>
                      </EqSubFunction>
              </EqFunction>
       </SubEquipment>
       <SubEquipment name="N" phase="N" virtual="false">
              <LNode iedName="SIP" IdInst="Mod2_MU1" prefix="U01N"
              InClass="TVTR" InInst="4" InType="SIPROTEC5_LNType_TVTR" />
              <EqFunction name="ProxyLNs">
                      <EqSubFunction name="ProxyLN1">
                             <LNode iedName="SIP1" IdInst="PowS_MeasPointV3ph1"
                             InClass="TVTR" InInst="4" InType="SIPROTEC5_LNType_TVTR">
                                     <Private type="eIEC61850-6-100">
                                            <eIEC61850-6-100:LNodeInputs>
                                                   <eIEC61850-6-100:SourceRef
                                                   service="SMV" input="Voltage">
                                                   <eIEC61850-6-
                                                   100:SMVParametersRef id="SIPMod2MU103" />
                                                   </eIEC61850-6-100:SourceRef>
                                            </eIEC61850-6-100:LNodeInputs>
                                     </Private>
                             </LNode>
                      </EqSubFunction>
              </EqFunction>
       </SubEquipment>
```

Advantageously, the computer implemented method generates the publisher-subscriber data simultaneously for all the IEDs involved, that is, for each IED present in the engineering data.

According to one embodiment, the computer implemented method verifies the generated publisher-subscriber data based on historical data including, for example, other engineered process bus systems for substations that are having a similar topology to the substation for which the process bus system is being engineered.

According to another embodiment, the computer implemented method verifies the generated publisher-subscriber data based on user input, for example, by seeking an approval from a substation engineer who can then make changes, if required, to the publisher-subscriber data.

The computer implemented method stores into the engineering data the publisher-subscriber data, that is, updates the engineering data with the publisher-subscriber data.

According to one embodiment, the computer implemented method stores the engineering data including the publisher-subscriber data into a memory, for example, in an engineering database.

According to one embodiment, the engineering database is a storage in the cloud which is accessible via a communication network such as a wireless communication network by a user accessing the substation engineering tool and/or the substation communication configuration tool.

According to another embodiment, the engineering database is a storage on the local machine, for example, a machine accessible by the user of the substation engineering tool and/or the substation communication configuration tool.

The computer implemented method transfers the engineering data to a substation communication configuration tool via the SCD file. The SCD file includes the engineering data updated with the publisher-subscriber data.

The computer implemented method automatically maps, in the substation communication configuration tool, the publisher logical device and the subscriber logical device based on the engineering data and the publisher-subscriber data for engineering the process bus system.

The computer implemented method extracts, from the publisher-subscriber data, IEC 6-100 standard related sourceRef information which is obtained by transforming single line diagram (SLD) information from the engineering data.

The computer implemented method, for example by using a parser of the substation communication configuration tool, analyzes the engineering data and creates the automatic mapping based on the sourceRef information.

As used herein, "automatic mapping" refers to Generic Object-Oriented Substation Event (GOOSE) mapping and Sample Measured Value (SMV) mapping between the publisher logical device and the subscriber logical device.

The computer implemented method automatically maps the publisher logical device and the subscriber logical device by populating the publisher logical device and each of the corresponding subscriber logical device(s), in the substation communication configuration tool, with GOOSE information and the SMV streams from the engineering data.

Advantageously, for facilitating the automatic mapping in the substation communication configuration tool, the computer implemented method, generates dedicated ports each for GOOSE and SMV mappings, in the publisher logical devices and the subscriber logical devices, using the substation engineering tool. The computer implemented method receives user preferences from a user using the substation engineering tool for connection of the dedicated ports between the publisher logical devices and the subscriber logical devices. The computer implemented method generates sourceRef information based on these user preferences for the connections and updates the publisher-subscriber data with the sourceRef information. The computer implemented method updates the engineering data with the publisher-subscriber data. The computer implemented method then uses the engineering data updated with the sourceRef information, that is, the publisher-subscriber data, to automatically populate the publisher logical devices and the corresponding subscriber logical devices with the SMV and GOOSE mappings, using the substation communication configuration tool.

According to one embodiment, the computer implemented method, for engineering a process bus system associated with a brownfield substation, that is, an existing substation already having mappings created between in its IEDs, generates a single line diagram (SLD) having the publisher logical device and the subscriber logical device visually linked with one another, wherein the SLD is stored in the engineering data.

According to this embodiment, the computer implemented method generates the SLD based on the engineering data and assigns various IEDs with a publisher role and/or a subscriber role based on the existing mappings therebetween and then renders the mappings visually by linking the publisher logical devices and the subscriber logical devices with one another. This enables a user such as a substation engineer to visualize the mappings easily. Advantageously, for rendering and/or visualization of the SLD, the computer implemented method creates ports within the SLD, for example, corresponding to representations of each of the IEDs. The ports are created for the GOOSE and SMV data streams. The computer implemented method then links the IEDs based on the publisher logical device and/or subscriber logical device relationship therebetween.

According to another embodiment, the computer implemented method, for engineering a process bus system associated with a greenfield substation, updates a single line diagram (SLD) based on the engineering data to visually link the publisher logical device and the subscriber logical device with one another. For a greenfield substation, the SLD is stored in the engineering data.

The substation engineering tool, for example, DIGSI 5 from Siemens, for engineering the process bus system, comprises a transceiver that receives, from a substation communication configuration tool, a substation configuration description (SCD) file comprising engineering data associated with intelligent electronic device(s) (IEDs) deployable in a substation. The transceiver also transfers an IID file and/or an ICD file to the substation communication configuration tool wherein the SCD file is generated. The substation engineering tool also comprises a parser that obtains the engineering data from the SCD file, a processor that generates publisher-subscriber data by determining a publisher logical device and a subscriber logical device corresponding to the publisher logical device from the IEDs and the connections therebetween, based on the engineering data and a memory that stores therein the engineering data and the publisher-subscriber data which is transferred to the substation communication configuration tool for automatically mapping the publisher logical device and the subscriber logical device from the IEDs.

The substation communication configuration tool, for example, the IEC 61850 system configurator from Siemens, generates a substation configuration description (SCD) file by employing a processor. The substation communication configuration tool comprises a transceiver that receives, from the substation engineering tool, an IID file and/or an ICD file comprising engineering data associated with one or more intelligent electronic device(s) (IEDs), for generating the SCD file. The transceiver then transfers the generated SCD file back to the substation engineering tool.

The substation communication configuration tool also comprises a parser that obtains the engineering data and publisher-subscriber data from the SCD file, the processor that automatically maps, in the substation communication configuration, a publisher logical device and a subscriber logical device from the IEDs, wherein the automatic mapping comprises Generic Object-Oriented Substation Event (GOOSE) mapping and Sample Measured Value (SMV) mapping between the publisher logical device and the subscriber logical device, for engineering the process bus system, and a memory that stores therein the SCD file, and the automatic mapping performed between the publisher logical device and the subscriber logical device.

According to one embodiment of the present disclosure, the substation engineering tool and the substation communication configuration tool are configurable as a web-based platform, for example, a website hosted on a server or a network of servers.

According to another embodiment of the present disclosure, the substation engineering tool and the substation communication configuration tool are implemented in the cloud computing environment as a cloud computing-based platform implemented as a service.

According to yet another embodiment, the substation engineering tool and the substation communication configuration tool are configured as an edge-based offering installable at the substation and capable of communicating with a cloud-based server.

According to one or more of the above embodiments, the substation engineering tool and the substation communication configuration tool are deployable on a computer and leverage the hardware architecture of the computer such as the transceiver that is the receiver and the transmitter, the memory, the processor, etc.

Advantageously, the substation engineering tool and the substation communication configuration tool are in communication with one another over a communication network such as a wired communication network, for example, when they are deployed on the same machine, or a wireless communication network.

Also disclosed herein is a computer program product for engineering a process bus system. The computer program product comprises a non-transitory computer readable storage medium that stores computer program codes comprising instructions executable by at least one processor for engineering the process bus system, as disclosed in aforementioned description.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a process flowchart of a computer-implemented method for engineering a process bus system, according to an embodiment of the present disclosure.
- FIG 2: illustrates a system architecture for a process bus system, according to an embodiment of the present disclosure.
- FIG 3: is a system diagram illustrating communication between a substation communication configuration tool, a substation engineering tool and the the process bus system show in FIG 2, according to an embodiment of the present disclosure.
- FIG 4: illustrates a block diagram of a substation engineering tool, according to an embodiment of the present disclosure.
- FIG 5: illustrates a block diagram of a substation communication configuration tool, according to an embodiment of the present disclosure.
- FIG 6: is a block diagram illustrating an architecture of a computer system employed by the substation engineering tool shown in FIG 4 and the substation communication configuration tool shown in FIG 5, for engineering a process bus system, according to an embodiment of the present disclosure.
- FIGS 7A-7B: illustrate GOOSE mappings between publisher logical devices and subscriber logical devices.
- FIG 8: illustrates SMV mappings between publisher logical devices and subscriber logical devices.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

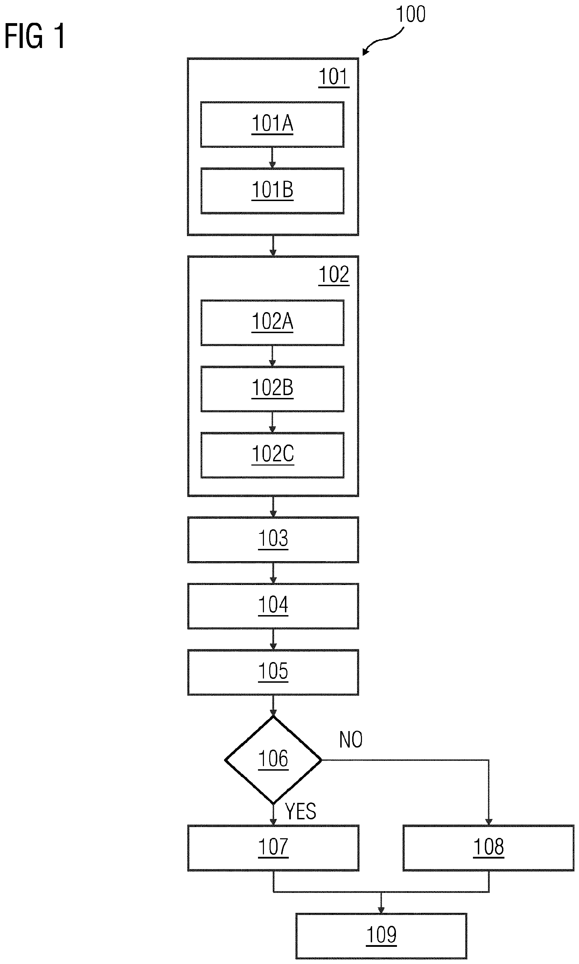

FIG 1 illustrates a process flowchart 100 of a computer-implemented method for engineering a process bus system, according to an embodiment of the present disclosure.

At step 101, the computer implemented method obtains, from a substation engineering tool, engineering data associated with one or more intelligent electronic device(s) (IEDs) deployable in a substation. The engineering data includes a capability of each of the IEDs, a Single Line Diagram (SLD) of the substation, Generic Object-Oriented Substation Event (GOOSE) subscription information, a protocol, that is, a communication protocol, associated with each of the IEDs and merging units, sampled measured values (SMV) streams having measurements recorded by a current transformer and/or a voltage transformer deployed in the substation that are routed to the merging unit(s). The computer implemented method extracts the engineering data from at least a substation configuration description (SCD) file available in the substation engineering tool.

At step 101A, the computer implemented method extracts from the engineering data, the capability of each of the IEDs by accessing an IED Capability Description (ICD) file associated with each of the IEDs. The IED file is available in the substation engineering tool. The ICD file includes a generic description of entire capability range of a given IED, including the functions and objects that the IED can support.

At step 101B, the computer implemented method extracts from the engineering data, the GOOSE subscription information by accessing an instantiated IED description (IID) file associated with each instantiated IED. The IID file is available in the substation engineering tool. The IID file includes configuration information associated with the IED such as GOOSE subscription information.

At step 102, the computer implemented method generates, based on the engineering data, publisher-subscriber data by determining a publisher logical device and a subscriber logical device corresponding to the publisher logical device, from the IEDs and the connections therebetween. The publisher-subscriber data refers to data associated with the IEDs, and includes, therein the publisher logical device and the subscriber logical device corresponding to the publisher logical device. The publisher logical device is a logical instance of a publisher device, that is, an IED publishing information to one or more other IEDs. The subscriber logical device is a logical instance of a subscriber device, that is, an IED subscribing information from a publisher device such as a merging unit. The publisher-subscriber data includes data associated with a publisher device and many subscriber devices corresponding to the publisher device. An IED may act as a publisher device or a subscriber device, based on a communication protocol associated therewith. For example, in a single line diagram (SLD), a direction of a connection node signifies whether a port associated with the connection node is publishing or subscribing.

At step 102A, the computer implemented method, identifies a protocol associated with the IEDs. At step 102B, the computer implemented method, assigns each of the IEDs a role of the publisher logical device or the subscriber logical device. For example, when a merging unit protocol is identified to be enabled then the IED acts as a publisher device and when a client protocol is identified to be enabled then the IED acts as a subscriber device. Advantageously, the protocols are IEC 61850 protocols. The computer implemented method generates the publisher-subscriber data simultaneously for all the IEDs involved, that is, for each IED present in the engineering data. At step 102B, the computer implemented method, in the substation engineering tool, generates sourceRef information based on the engineering data, by creating dedicated ports in the publisher logical device and the subscriber logical device which when linked allow transfer of data such as SMV data therebetween. The computer implemented method stores the sourceRef information in the publisher-subscriber data.

At step 102C, the computer implemented method verifies the generated publisher-subscriber data, for example, based on historical data including other engineered process bus systems for substations that are having a similar topology to the substation for which the process bus system is being engineered and/or based on user input by seeking an approval from a substation engineer.

At step 103, the computer implemented method stores into the engineering data the publisher-subscriber data, that is, updates the engineering data with the publisher-subscriber data. The computer implemented method stores the engineering data including the publisher-subscriber data into a memory, for example, in an engineering database.

At step 104, the computer implemented method transfers the engineering data to a substation communication configuration tool via the SCD file. The SCD file includes the engineering data updated with the publisher-subscriber data.

At step 105, the computer implemented method automatically maps in the substation communication configuration tool, the publisher logical device and the subscriber logical device based on the engineering data and the publisher-subscriber data for engineering the process bus system.

At step 105, the computer implemented method maps Generic Object-Oriented Substation Event (GOOSE) and Sample Measured Value (SMV) between the publisher logical device and the subscriber logical device. At step 105, the computer implemented method automatically maps the publisher logical device and the subscriber logical device by populating the publisher logical device and each of the corresponding subscriber logical device(s), in the substation communication configuration tool, with GOOSE information and the SMV streams from the engineering data.

At step 106, the computer implemented method checks whether, the substation for which the engineering is being performed is a brownfield substation, that is, an existing substation already having mappings created between in its IEDs. If yes, then at step 107, the computer implemented method generates a single line diagram (SLD) having the publisher logical device and the subscriber logical device visually linked with one another. The computer implemented method generates the SLD based on the engineering data and assigns various IEDs with a publisher role and/or a subscriber role based on the existing mappings therebetween and then renders the mappings visually by linking the publisher logical devices and the subscriber logical devices with one another. This enables a user such as a substation engineer to visualize the mappings easily. Advantageously, for rendering and/or visualization of the SLD, the computer implemented method creates ports within the SLD, for example, corresponding to representations of each of the IEDs. The ports are created for the GOOSE and SMV data streams. The computer implemented method then links the IEDs based on the publisher logical device and/or subscriber logical device relationship therebetween.

If the substation is not a brownfield substation, that is, it is a greenfield substation, then at step 108, the computer implemented method, updates a single line diagram (SLD) based on the engineering data to visually link the publisher logical device and the subscriber logical device with one another.

At step 109, the computer implemented method stores the SLD in the engineering data, that is, updates the engineering data with the SLD.

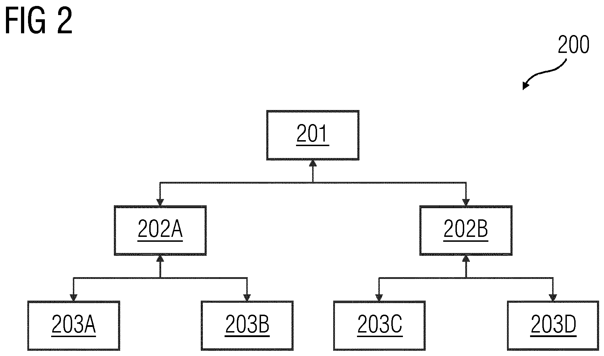

FIG 2 illustrates a system architecture for a process bus system 200, according to an embodiment of the present disclosure. The process bus system 200 comprises, but is not limited to, a transformer 201 such as a current transformer or a voltage transformer, one or more merging devices 202A-202B and one or more intelligent electronic devices (IEDs) 203A-203D.

The merging unit(s) 202A-202B are connected to the transformer 201 through a wired network, that is, a process bus. The process bus involves positioning the first merging unit 202A and the second merging unit 202B close to the transformer 201. Further, the IEDs 203A-203D are connected to one or more of the merging units 202A-202B through a wired network such as an ethernet optical fiber cable.

Although FIG 1 shows two merging units 202A-202B connected to the transformer 201, it is understood for a person skilled in the art that only one merging unit 202A or 202B or any number of merging units 202A-202B can be connected to the transformer 201 depending upon the requirements. Likewise, any number of IEDs 203A-203D can be connected to the merging units 202A-202B depending upon the requirements of the substation.

Each of the merging units 202A-202B record the measured values of the transformer 201, digitize the recorded measured values and sends the digitized measured values to the one or more IEDs 203A-203D via a sampled measured values (SMV) data stream over the wired network. Each of the merging units 202A-202B publish current-sampled and voltage-sampled values on a process-bus network according to the IEC 61850-9-2 and IEC 61869-9 standards. Further, the one or more IEDs 203A-203D allow a subscription of current-sampled and voltage-sampled values published by the merging units 202A-202B complying with the IEC 61850-9-2 and IEC 61869-9 standards.

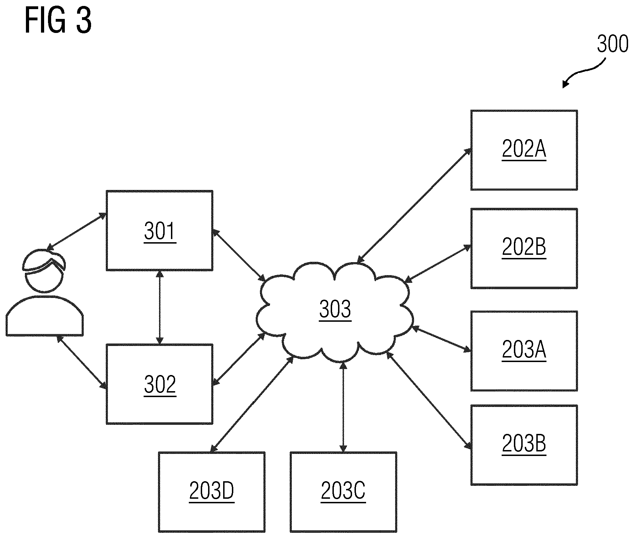

FIG 3 is a system diagram 300 illustrating communication between a substation communication configuration tool 302, a substation engineering tool 301 and the the process bus system 200 show in FIG 2, according to an embodiment of the present disclosure.

The substation communication configuration tool 302 is provided as per the IEC standards for subscribing required current transformer (CT) and voltage transformer (VT) inputs of the merging units 202A-202B and/or the IEDs 203A-203D to signals published by the merging units 202A-202B.

The substation engineering tool 301 is a configuration and operation tool for the one or more merging units 202A-202B, and/or the IEDs 203A-203D. Using the substation engineering tool 301, a technician/user can create system topologies, configure hardware, set function settings and perform many further tasks related to the one or more merging units 202A-202B and/or the IEDs 203A-203D. A user using the substation engineering tool 301 can configure the one or more merging units 202A-202B, and the IEDs 203A-203D either as a merging unit or an IED. Also, the configuration and one or more setting/s performed by the user for the one or more merging units 202A-202B, and the IEDs 203A-203D through the substation engineering tool 301 may be communicated and transmitted to a remote database (not shown) for publishing through a communication network 303. The communication network 303 is, for example, a wired network, a wireless network, or a network formed from any combination thereof. Thus, the user using the substation engineering tool 301 or the substation communication configuration tool 302 may access the one or more merging units 202A-202B, and the IEDs 203A-203D, via the communication network 303. It may be understood by a person skilled in the art that some of the one or more merging units 202A-202B, and the IEDs 203A-203D may not be directly accessible via the communication network 303, in which case, they may be accessible via a common point such as a nearest communication gateway (not shown) or a SCADA system (not shown).

Moreover, the substation communication configuration tool 302 and the substation engineering tool 301 may also communicate with each other through a wired or a wireless network (not shown). Such communication is needed for performing import functions, export functions and other functions as needed to exchange data therebetween. The export of data from the substation engineering tool 301 to the substation communication configuration tool 302 may happen interconnecting CT/VT output channels of the merging units 202A-202B with the required CT/VT input channels of the one or more IEDs 203A-203D in the substation communication configuration tool 302. Similarly, the import of data from the substation communication configuration tool 302 into substation engineering tool 301 may happen via these interconnected channels between the merging units 202A-202B and the IEDs 203A-203D for the whole substation.

In some instances, the phrase IEDs shall be used hereafter to collectively refer to the merging units 202A-202B and the IEDs 203A-203D connected to the merging units 202A-202B.

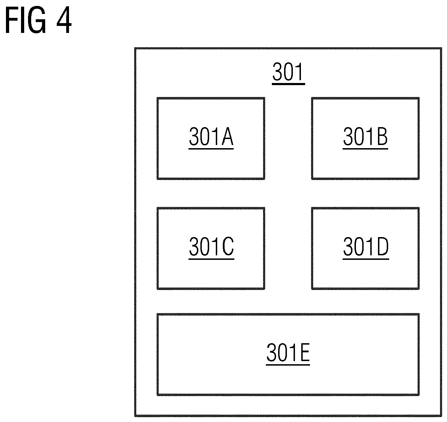

FIG 4 illustrates a block diagram of a substation engineering tool 301 shown in FIG 3, according to an embodiment of the present disclosure.

The substation engineering tool 301 comprises, but is not limited to, a transceiver 301A, a parser 301B, a processor 601C, a memory 301D, and an interface 301E such as a graphical user interface.

A user uses the interface 301E of the substation engineering tool 301, for example to import/export a file, such as the SCD file, from/to the substation communication configuration tool 302. For this, the user may first select an IED 203A-203D or a merging unit 202A-202B from the IEDs 202A-203D of the process bus system 200 for which the engineering data is to be imported, that is, via a Substation Configuration Description (SCD) file. In particular, the SCD file describes a version of the IED 203A-203D. Upon generation of such an import or export request, the transceiver 301A of the substation engineering tool 301 transmits/receives the SCD file to/from the substation communication configuration tool 302.

Thus, the transceiver 301A receives a substation configuration description (SCD) file comprising engineering data associated with one or more intelligent electronic device(s) (IEDs) 202A-202B, 203A-203D deployable in a substation and transfers the SCD file to a substation communication configuration tool 302.

The parser 301B obtains the engineering data from the SCD file. The parser 301B of the substation engineering tool 301 parses the SCD file to identify, for example, a value associated with a transformer setting of the process bus system 200, a communication protocol enabled for the IEDs 203A-203D or the merging units 202A-202B, etc. For this, the parser 301B parses the SCD file.

The processor 601C of the substation engineering tool 301 generates publisher-subscriber data by determining a publisher logical device, that is, one of the IEDs 202A-202B, 203A-203D, and a subscriber logical device, that is, one of the IEDs 202A-202B, 203A-203D, corresponding to the publisher logical device 202A-202B, 203A-203D from the IEDs 202A-202B, 203A-203D and the connections therebetween, based on the engineering data.

The memory 301D of the substation engineering tool 301 stores therein the engineering data and the publisher-subscriber data.

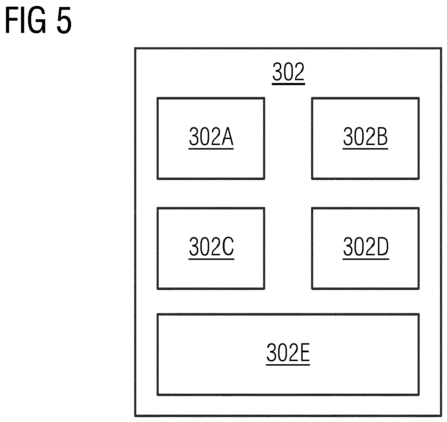

FIG 5 illustrates a block diagram of a substation communication configuration tool 302 shown in FIG 3, according to an embodiment of the present disclosure.

The substation communication configuration tool 302 comprises, but is not limited to, a transceiver 302A, a parser 302B, a processor 302C, a memory 302D, and an interface 302E such as a graphical user interface.

A user uses the interface 302E of the substation communication configuration tool 302, for example to import/export a file, such as the SCD file, from/to the substation engineering tool 301. The transceiver 302A enables the receipt of the IID file and/or the ICD file from the substation engineering tool 301 and/or transfer the SCD file to the substation engineering tool 301. The parser 302B obtains the engineering data and the publisher-subscriber data from the SCD file by parsing the SCD file. The processor 302C automatically maps a publisher logical device and a subscriber logical device from the IEDs 202A-202B, 203A-203D based on the engineering data and the publisher-subscriber data. The automatic mapping includes Generic Object-Oriented Substation Event (GOOSE) mapping and Sample Measured Value (SMV) mapping between the publisher logical device and the subscriber logical device, for engineering the process bus system 200. The memory 302D stores therewithin the SCD file and the automatic mapping performed between the publisher logical device and the subscriber logical device.

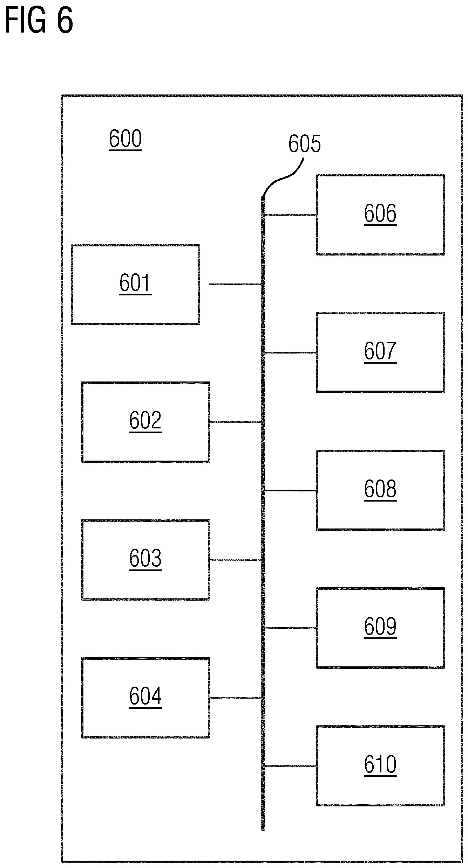

FIG 6 is a block diagram illustrating an architecture of a computer system 600 employed by the substation engineering tool 301 shown in FIG 4 and/or the substation communication configuration tool 302 shown in FIG 5, for engineering a process bus system, according to an embodiment of the present disclosure. According to this embodiment illustrated in FIG 6, the substation engineering tool 301 and/or the substation communication configuration tool 302 are deployable on the computer system 600 as opposed to stand alone tools 301 and 302 shown in FIGS 4 and 5, respectively.

The computer system 600 is programmable using a high-level computer programming language. The computer system 600 may be implemented using programmed and purposeful hardware. The computer system 600 comprises a processor 601, a non-transitory computer readable storage medium such as a memory unit 602 for storing programs and data, an input/output (I/O) controller 603, a network interface 604, a data bus 605, a display unit 606, input devices 607, a fixed media drive 608 such as a hard drive, a removable media drive 609 for receiving removable media, output devices 610, etc.

The processor 601 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 601 may also be implemented as a processor set comprising, for example, a general-purpose microprocessor and a math or graphics co-processor. The substation engineering tool 301 and/or the substation communication configuration tool 302 disclosed herein is not limited to a computer system 600 employing a processor 601. The computer system 600 may also employ a controller or a microcontroller. The processor 601 executes the modules defining computer program instructions of the substation engineering tool 301 and/or the substation communication configuration tool 302.

The memory unit 602 is used for storing programs, applications, and data. For example, any modules of the substation engineering tool 301 and/or the substation communication configuration tool 302 are stored in the memory unit 602 of the computer system 600. The memory unit 602 is, for example, a random-access memory (RAM) or another type of dynamic storage device that stores information and instructions for execution by the processor 601. The memory unit 602 also stores temporary variables and other intermediate information used during execution of the instructions by the processor 601. The computer system 600 further comprises a read only memory (ROM) or another type of static storage device that stores static information and instructions for the processor 601. The I/O controller 603 controls input actions and output actions performed by the substation engineering tool 301 and/or the substation communication configuration tool 302.

The network interface 604 enables connection of the computer system 600 to the communication network 303. For example, the substation engineering tool 301 and/or the substation communication configuration tool 302 connects to the communication network 303 via the network interface 604 when deployed on the computer system 600. In an embodiment, the network interface 604 is provided as an interface card also referred to as a line card. The network interface 604 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 605 permits communications between the modules of substation engineering tool 301 and/or the substation communication configuration tool 302.

The display unit 606, displays information such as the publisher logical devices, the subscriber logical devices, the dedicated ports created for SMV and/or GOOSE, the automatic mapping therebetween, the SLD, etc. The display unit 606 also displays information such as user interface elements including text fields, buttons, windows, etc., for allowing a user to provide his/her inputs such as the linking between the dedicated ports created for the SMV/GOOSE mappings. The display unit 606 comprises, for example, a liquid crystal display, a plasma display, an organic light emitting diode (OLED) based display, etc. The input devices 607 are used for inputting data into the computer system 600. The input devices 607 are, for example, a keyboard such as an alphanumeric keyboard, a touch sensitive display device, and/or any device capable of sensing a tactile input.

Computer applications and programs are used for operating the computer system 600. The programs are loaded onto the fixed media drive 608 and into the memory unit 602 of the computer system 600 via the removable media drive 609. In an embodiment, the computer applications and programs may be loaded directly via the communication network 303. Computer applications and programs are executed by double clicking a related icon displayed on the display unit 606 using one of the input devices 607. The output devices 610 output the results of operations performed by the substation engineering tool 301 and/or the substation communication configuration tool 302. For example, the substation engineering tool 301 and/or the substation communication configuration tool 302 provides graphical representation of the completed engineering along with the automatic SMV/GOOSE mappings between the merging units 202A-202B and the IEDs 203A-203D, using the output devices 610.

The processor 601 executes an operating system. The computer system 600 employs the operating system for performing multiple tasks. The operating system is responsible for management and coordination of activities and sharing of resources of the computer system 600. The operating system further manages security of the computer system 600, peripheral devices connected to the computer system 600, and network connections. The operating system employed on the computer system 600 recognizes, for example, inputs provided by the users using one of the input devices 607, the output display, files, and directories stored locally on the fixed media drive 608. The operating system on the computer system 600 executes different programs using the processor 601. The processor 601 and the operating system together define a computer platform for which application programs in high level programming languages are written.

The processor 601 of the computer system 600 employed by the substation engineering tool 301 and/or the substation communication configuration tool 302 retrieves instructions defined by the modules of the substation engineering tool 301 and/or the substation communication configuration tool 302 for performing respective functions disclosed in the detailed description of FIG 2. The processor 601 retrieves instructions for executing the modules of the substation engineering tool 301 and/or the substation communication configuration tool 302 from the memory unit 602. A program counter determines the location of the instructions in the memory unit 602. The program counter stores a number that identifies the current position in the program of each of the modules of the substation engineering tool 301 and/or the substation communication configuration tool 302. The instructions fetched by the processor 601 from the memory unit 602 after being processed are decoded. The instructions are stored in an instruction register in the processor 601. After processing and decoding, the processor 601 executes the instructions, thereby performing one or more processes defined by those instructions.

At the time of execution, the instructions stored in the instruction register are examined to determine the operations to be performed. The processor 601 then performs the specified operations. The operations comprise arithmetic operations and logic operations. The operating system performs multiple routines for performing several tasks required to assign the input devices 607, the output devices 610, and memory for execution of the modules of the substation engineering tool 301 and/or the substation communication configuration tool 302. The tasks performed by the operating system comprise, for example, assigning memory to the modules of the substation engineering tool 301 and/or the substation communication configuration tool 302, and to data used by the substation engineering tool 301 and/or the substation communication configuration tool 302, moving data between the memory unit 602 and disk units, and handling input/output operations. The operating system performs the tasks on request by the operations and after performing the tasks, the operating system transfers the execution control back to the processor 601. The processor 601 continues the execution to obtain one or more outputs. The outputs of the execution of the modules of the substation engineering tool 301 and/or the substation communication configuration tool 302 are displayed to the user.

For purposes of illustration, the detailed description refers to the substation engineering tool 301 and/or the substation communication configuration tool 302 being run locally on the computer system 600, however the scope of the present invention is not limited to the substation engineering tool 301 and/or the substation communication configuration tool 302 being run locally on the computer system 600 via the operating system and the processor 601, but may be extended to run remotely over the communication network 303 by employing a web browser and a remote server, a mobile phone, or other electronic devices. One or more portions of the computer system 600 may be distributed across one or more computer systems (not shown) coupled to the communication network 303.

Disclosed herein is also a computer program product comprising a non-transitory computer readable storage medium that stores computer program codes comprising instructions executable by at least one processor 601 for engineering the process bus system 200, as disclosed in aforementioned description.

The computer program product comprises a first computer program code for obtaining, from a substation engineering tool 301, engineering data associated with one or more intelligent electronic device(s) (IEDs) 202A-202B, 203A-203D deployable in a substation, wherein the engineering data is extracted from at least a substation configuration description (SCD) file; a second computer program code for generating publisher-subscriber data by determining a publisher logical device and a subscriber logical device corresponding to the publisher logical device from the IEDs 202A-202B, 203A-203D and the connections therebetween, based on the engineering data; a third computer program code for storing into the engineering data the publisher-subscriber data; a fourth computer program code for transferring the engineering data to a substation communication configuration tool 302 via the SCD file; and a fifth computer program code for automatically mapping, in the substation communication configuration tool 302, the publisher logical device and the subscriber logical device based on the engineering data and the publisher-subscriber data, wherein the automatic mapping comprises Generic Object-Oriented Substation Event (GOOSE) mapping and Sample Measured Value (SMV) mapping between the publisher logical device and the subscriber logical device, for engineering the process bus system 200.

In an embodiment, a single piece of computer program code comprising computer executable instructions, performs one or more steps of the computer implemented method according to the present disclosure, for engineering the process bus system 200. The computer program codes comprising computer executable instructions are embodied on the non-transitory computer readable storage medium. The processor 601 of the computer system 600 retrieves these computer executable instructions and executes them. When the computer executable instructions are executed by the processor 601, the computer executable instructions cause the processor 601 to perform the steps of the computer implemented method for engineering the process bus system 200.

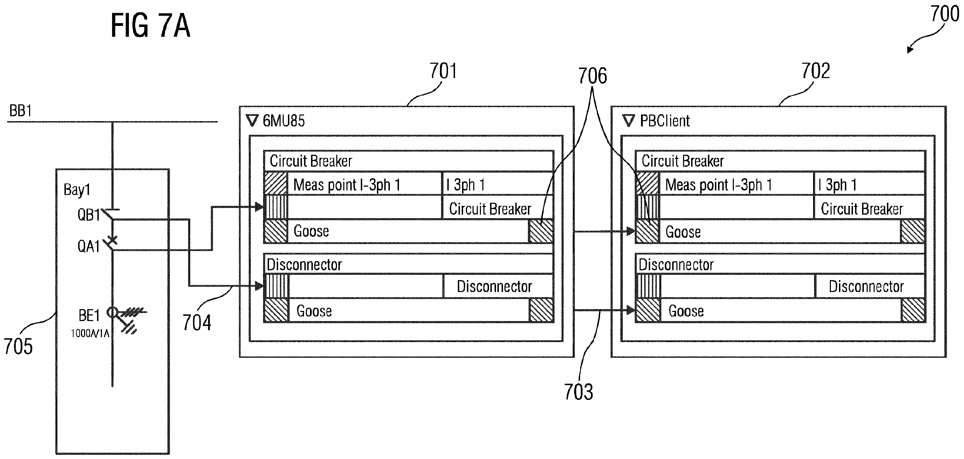

FIGS 7A-7B illustrate GOOSE mappings between publisher logical devices 701 and subscriber logical devices 702.

FIG 7A shows a graphical representation 700 rendered by the substation engineering tool 301 including a single line diagram (SLD) 705 having a bay Bay1 in which various primary and secondary substation elements such as circuit breakers QB1, QA1, and current transformers BE1 are connected to each other and to a publisher logical device 701 that represents a merging unit 202A-202B via physical connections 704. These substation elements send data to the publisher logical devices 701 which is then passed thereon to the corresponding subscriber logical devices 702.

The substation engineering tool 301 based on the engineering data available from the SCD file generates publisher-subscriber data under which dedicated ports 706 are created within the publisher logical device 701 and corresponding subscriber logical device(s) 702. A user using the substation engineering tool 301 may then connect these ports 706 via links 703 which in turn lead to generation of the sourceRef information that is passed to the substation communication configuration tool 302 for automatic mapping of the GOOSE/SMV.

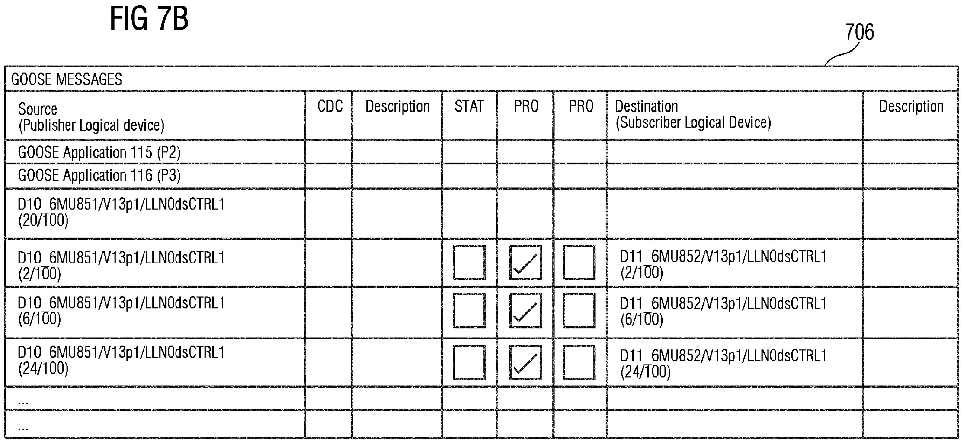

FIG 7B illustrates the substation communication configuration tool 702 in which the automatic GOOSE mapping takes place between the source and the destination, that is, between the publisher logical device(s) 701 and the subscriber logical devices 702 shown in FIG 7A based on the sourceRef information stored in the publisher-subscriber data and/or the engineering data.

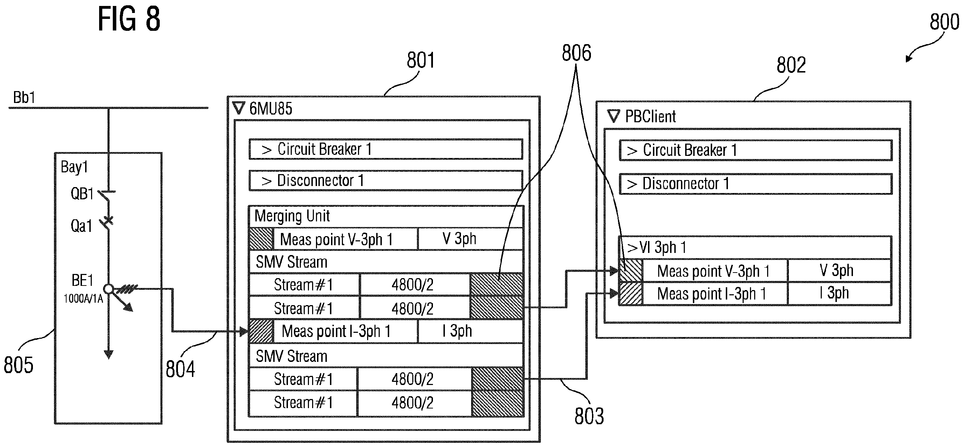

FIG 8 illustrates SMV mappings between publisher logical devices 801 and subscriber logical devices 802. FIG 8 shows a graphical representation 800 rendered by the substation engineering tool 301 including a single line diagram (SLD) 805 having a bay Bay1 in which various primary and secondary substation elements such as circuit breakers QB1, QA1, and current transformers BE1 are connected to each other and to a publisher logical device 801 that represents a merging unit 202A-202B via physical connections 804. These substation elements send data to the publisher logical devices 801 which is then passed thereon to the corresponding subscriber logical devices 802.

The substation engineering tool 301 generates dedicated SMV ports 806 within the publisher logical device 801 and corresponding subscriber logical device(s) 802 for SMV data streams. Moreover, the substation engineering tool 301 also generates a dedicated port 807 for measuring point in the publisher logical device 801, to which the SMV data stream is routed from the current transformer BE1. A user using the substation engineering tool 301 links the publisher logical device 801 and the corresponding subscriber logical devices 802 by connecting the ports 806 via links 803, thereby generating sourceRef information.

Based on the engineering data received from the substation engineering tool 301 via the SCD file, the substation communication configuration tool 302 automatically maps the SMV data streams between the source and the destination, that is, between the publisher logical device(s) 801 and the subscriber logical devices 802 similar to the GOOSE mappings shown in FIG 7B.

Where databases are described such as the engineering database, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present disclosure can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present disclosure is not limited to a particular computer system platform, processor, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of systems, and is not limited to any particular distributed architecture, network, or communication protocol.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### Reference list

- 200: Process bus system
- 201: Transformer
- 202A-202B: Merging unit
- 203A-203D: Intelligent electronic devices (IEDs)
- 300: System diagram
- 301: Substation engineering tool
- 301A: transceiver of Substation engineering tool
- 301B: parser of Substation engineering tool
- 301C: processor of Substation engineering tool
- 301D: memory of Substation engineering tool
- 301E: interface of Substation engineering tool
- 302: Substation communication configuration tool
- 302A: transceiver of Substation communication configuration tool
- 302B: parser of Substation communication configuration tool
- 302C: processor of Substation communication configuration tool
- 302D: memory of Substation communication configuration tool
- 302E: interface of Substation communication configuration tool
- 303: communication network
- 600: computer system
- 601: processor
- 602: memory unit
- 603: input/output (I/O) controller
- 604: network interface
- 605: data bus
- 606: display unit
- 607: input devices
- 608: fixed media drive
- 609: removable media drive
- 610: output devices
- 700: graphical representation rendered by the substation engineering tool
- 800: graphical representation rendered by the substation communication configuration tool
- 701, 801: publisher logical device
- 702, 802: subscriber logical device
- 703, 803: link(s)
- 704, 804: physical connections between the substation elements and the merging
- unit 705, 805: single line diagram (SLD)
- 706: ports for GOOSE mappings
- 806: ports for SMV mappings
- 807: port for measuring point

## Claims

1. A computer implemented method (100) for engineering a process bus system (200), comprising:
- obtaining (101), from a substation engineering tool (301), engineering data associated with one or more intelligent electronic device(s) (IEDs) (202A-202B, 203A-203D) deployable in a substation, wherein the engineering data is extracted from at least a substation configuration description (SCD) file;
- generating (102) publisher-subscriber data by determining a publisher logical device (701, 801) and a subscriber logical device (702, 802) corresponding to the publisher logical device (701, 801) from the IEDs (202A-202B, 203A-203D) and the connections therebetween, based on the engineering data;
- storing (103) into the engineering data the publisher-subscriber data;
- transferring (104) the engineering data to a substation communication configuration tool (302) via the SCD file; and
- automatically mapping (105), in the substation communication configuration tool (302), the publisher logical device (701, 801) and the subscriber logical device (702, 802) based on the engineering data and the publisher-subscriber data, wherein the automatic mapping comprises Generic Object-Oriented Substation Event (GOOSE) mapping and Sample Measured Value (SMV) mapping between the publisher logical device (701, 801) and the subscriber logical device (702, 802), for engineering the process bus system (200).

2. The computer implemented method (100) according to claim 1, wherein the engineering data comprises one or more of capability of each of the IEDs (202A-202B, 203A-203D), a Single Line Diagram (SLD) (705, 805) of the substation, GOOSE subscription information, a protocol associated with each of the IEDs (203A-203D) and merging units (202A-202B), and sampled measured values (SMV) streams having measurements recorded by one or more of a current transformer and a voltage transformer routed to one or more of the merging units (202A-202B).

3. The computer implemented method (100) according to claim 1, wherein the publisher-subscriber data comprises the publisher logical device (701, 801) and the subscriber logical device (702, 802) corresponding to the publisher logical device (701, 801).

4. The computer implemented method (100) according to any one of the claims 1 and 3, wherein generating the publisher-subscriber data, based on the engineering data comprises:
- identifying a protocol associated with the IEDs (202A-202B, 203A-203D); and
- assigning the IEDs (202A-202B, 203A-203D) a role of one of the publisher logical device (701, 801) and the subscriber logical device (702, 802).

5. The computer implemented method (100) according to any one of the claims 1, 2 and 4, wherein automatically mapping the publisher logical device (701, 801) and the subscriber logical device (702, 802) comprises populating the publisher logical device (701, 801) and the corresponding subscriber logical device (702, 802), in the substation communication configuration tool (302), with GOOSE information and the SMV streams from the engineering data.

6. The computer implemented method (100) according to any one of the claims 1 and 5, further comprising one of generating an SLD (705, 805) having the publisher logical device (701, 801) and the subscriber logical device (702, 802) visually linked with one another for brownfield substations, wherein the SLD (705, 805) is stored in the engineering data.

7. A computer-program product having machine-readable instructions stored therein, which when executed by one or more processing units, cause the processing units to perform the computer implemented method (100) according to the claims 1 to 6.

8. A substation engineering tool (301) for engineering a process bus system (200), comprising:
- a transceiver (301A) configured to perform one or more of:
∘ receive a substation configuration description (SCD) file comprising engineering data associated with one or more intelligent electronic device(s) (IEDs) deployable in a substation, from a substation communication configuration tool (302); and
∘ transfer one or more of an instantiated IED description (IID) file and an IED capability description (ICD) file to the substation communication configuration tool (302);
- a parser (301B) configured to obtain the engineering data from the SCD file;
- a processor (301C) configured to:
∘ generate publisher-subscriber data by determining a publisher logical device (701, 801) and a subscriber logical device (702, 802) corresponding to the publisher logical device (701, 801) from the IEDs (202A-202B, 203A-203D) and the connections therebetween, based on the engineering data; and
- a memory (301D) configured to store (103) the engineering data and the publisher-subscriber data.

9. A substation communication configuration tool (302) comprising:
- a transceiver (302A) configured to perform one or more of:
∘ receive one or more of an instantiated IED description (IID) file and an IED capability description (ICD) file associated with one or more intelligent electronic device(s) (IEDs) (202A-202B, 203A-203D) from the substation engineering tool (200); and
∘ transfer an SCD file generated based on one or more of the IID file and the ICD file to the substation engineering tool (200);
- a parser (302B) configured to obtain the engineering data and publisher-subscriber data from the SCD file;
- a processor (302C) configured to:
∘ generate the SCD file based on one or more of the IID file and the ICD file;
∘ automatically map, in the substation communication configuration tool (302), a publisher logical device (701, 801) and a subscriber logical device (702, 802) from the IEDs (202A-202B, 203A-203D) based on the engineering data and the publisher-subscriber data, wherein the automatic mapping comprises Generic Object-Oriented Substation Event (GOOSE) mapping and Sample Measured Value (SMV) mapping between the publisher logical device (701, 801) and the subscriber logical device (702, 802), for engineering the process bus system (200); and
∘ a memory (302D) configured to store the SCD file and the automatic mapping performed between the publisher logical device (701, 801) and the subscriber logical device (702, 802).
